(19) Europäisches Patentamt
European Patent Office
Office européen des brevets

(11) Veröffentlichungsnummer : **0 236 882 B1**

(12) **EUROPÄISCHE PATENTSCHRIFT**

(45) Veröffentlichungstag der Patentschrift : **16.01.91 Patentblatt 91/03**

(51) Int. Cl.$^5$ : **C01B 31/00**

(21) Anmeldenummer : **87102868.4**

(22) Anmeldetag : **28.02.87**

(54) **Verfahren zur Herstellung von Graphitfluorid.**

(30) Priorität : **08.03.86 DE 3607816**

(43) Veröffentlichungstag der Anmeldung : **16.09.87 Patentblatt 87/38**

(45) Bekanntmachung des Hinweises auf die Patenterteilung : **16.01.91 Patentblatt 91/03**

(84) Benannte Vertragsstaaten : **DE FR NL**

(56) Entgegenhaltungen :
**FR-A- 2 232 510**
**US-A- 3 674 432**
**US-A- 3 904 501**

(73) Patentinhaber : **HOECHST AKTIENGESELLSCHAFT**
**Postfach 80 03 20**
**D-6230 Frankfurt am Main 80 (DE)**

(72) Erfinder : **Staab, Rudolf, Dr.**
**Eichkopfallee 107**
**D-6237 Liederbach (DE)**

**EP 0 236 882 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Graphitfluorid durch heterogene Reaktion von Kohlenstoff mit elementarem Fluor in einem Wirbelbett.

Graphitfluorid der ungefähren chemischen Zusammensetzung $(CF)_n$ ist eine beständige feste Verbindung, die durch heterogene Umsetzung von Kohlenstoff mit Fluorgas bei höheren Temperaturen hergestellt werden kann. Sie besitzt eine sehr niedrige Oberflächenenergie und wird in verschiedenen Industriezweigen als hochwertiges Schmiermittel, wasser- und ölabstoßende Substanz (Antibenetzungsmittel), Korrosionsschutzmittel und als Batterierohstoff für Hochleistungszellen verwendet. Da die Nachfrage nach Graphitfluorid steigt, ist ein industriell anwendbares Verfahren zu seiner Herstellung von Interesse.

Die Fluorierung von Kohlenstoff unter Bildung von Graphitfluorid $(CF_x)_n$, mit $0<x<1,3$ wird durch die folgende Reaktionsgleichung wiedergegeben :

$$nC+\frac{nx}{2}F_2 \rightarrow (CF_x)_n \quad (1)$$

In der Praxis finden jedoch Nebenreaktionen statt, wenn die Reaktion nach Gleichung (1) fortschreitet. Zum einen kann das Kohlenstoffmaterial nach Gleichung (2) zu Perfluoralkanen auffluoriert werden :

$$C+F_2 \rightarrow CF_4,\ C_2F_6 \text{ usw.} \quad (2);$$

zum anderen kann bereits gebildetes Graphitfluorid zu Kohlenstoff und Perfluoralkanen disproportionieren :

$$(CF_x)_n \rightarrow C+CF_4,\ C_2F_6 \text{ usw.} \quad (3).$$

Die Fluorierungsreaktionen (1) und (2) sind exotherm, so daß es im Reaktor bei ungenügender Wärmeabführ zu einem Temperaturanstieg in der Kohlenstoffphase kommen kann.

Aus der US-PS 3 674 432 ist es bereits bekannt, Kohlenstoff mit Fluor bei Temperaturen von 620 bis 630°C zu Graphitfluorid umzusetzen. In Figur 2 dieser Literaturstelle wird ein Fließbettreaktor vorgestellt, bei dem Fluor von unten ein Sieb durchströmt und dabei den auf dem Sieb liegenden Kohlenstoff in die Gasphase trägt. Um ein Produkt mit genau umschriebener Zusammensetzung zu erhalten, wird empfohlen, die Reaktionstemperatur sehr genau konstant zu halten.

In der britischen Patentanmeldung 21 04 884 wird ein Verfahren zur Herstellung von Graphitfluorid beschrieben, bei dem Kohlenstoffmaterial auf speziellen Trägern in dünnen Schichten mit Fluor in Kontakt gebracht wird. Dabei ist es wesentlich, daß das Graphitmaterial nicht erschüttert wird, da es sonst zu explosionsartiger Zersetzung von gebildetem Graphitfluorid kommen kann. Bereits bei Schichtdicken von 200 mm können heftige Explosionen auftreten. Das Ausbreiten des Kohlenstoffs in dünnen Schichten erfordert großvolumige Reaktoren mit geringen Raum-Zeit-Ausbeuten. Es kommt hinzu, daß die Reaktion von der Oberfläche in das Innere vordringen muß. Daher sind bei diesem Verfahren Reaktionszeiten von mehreren 100 Stunden keine Seltenheit. Dennoch besteht die Gefahr, daß nach Fluorierung der obersten Schicht die Reaktion zum Erliegen kommt und ein inhomogenes Produkt anfällt.

Es bestand daher die Aufgabe, ein Verfahren zu entwickeln, bei dem Graphitfluorid in einem Reaktor mit hoher Raum-Zeit-Ausbeute hergestellt werden kann.

Gegenstand der Erfindung ist ein Verfahren zur Fluorierung von Kohlenstoffpulver, das in der Gasphase suspendiert ist, bei erhöhter Temperatur in einem prismenförmigen Behälter, der unten einen Boden und oben eine Öffnung aufweist, vertikal angeordnet ist und eine zentrosymmetrische Gaseinleitung bestitzt, mit Hilfe eines Gases, das elementares Fluor enthält. Das, erfindungsgemäße Verfahren ist dadurch gekennzeichnet, daß eine Reaktionstemperatur von 100-450°C eingehalten wird, das Gas mit Hilfe eines Rohres eingeleitet wird, das nahe der Mitte des Bodens des Behälters endet und das eingeleitete Gas von oben kommend auf die Mitte des Bodens des Behälters gerichtet wird. Wegen des innigen Kontakts der Kohlenstoffteilchen mit dem Fluor verläuft die Reaktion rasch und kann innerhalb von 24 Stunden beendet werden. Bevorzugt sind Reaktionszeiten von 12 bis 24 Stunden. Weiter bevorzugt ist eine Reaktion bei Normaldruck. Jedoch ist auch eine Reaktion bei Überdruck möglich. Es ist überraschend, daß bei Normaldruck die Reaktion ohne Auftreten von explosionsartigen Zersetzungen des Graphitfluorids durchgeführt werden kann, obwohl das gebildete Graphitfluorid sich in heftiger Bewegung befindet.

Der Querschnitt des prismenförmigen Behälters kann dreieckig, viereckig etc. sein. Besonders günstig ist ein kreisförmiger querschnitt, da dann die Aufwirbelung des Kohlenstoffs am gleichmäßigsten geschieht und es nicht zu Ablagerunen am Boden kommt.

Es ist vorteilhaft, wenn dem Fluor noch ein Inertgas (beispielsweise Stickstoff oder ein Edelgas) beigemischt ist. In diesem Fall läßt sich die Reaktionstemperatur leichter konstant halten.Bevorzugt ist eine Fluorkonzentration in der Gasphase von 5 bis 80 Vol.-%, insbesondere 10 bis 50 Vol.-%. Die Fluorkonzentration hängt ab von der Natur und der Teilchengröße des Kohlenstoffmaterials sowie von der Reaktionstemperatur. Je amorpher und feinteiliger das Kohlenstoffmaterial ist, desto niedriger sollte

die Reaktionstemperatur und die Fluorkonzentration gewählt werden. Beispielsweise setzt die Reaktion zwischen Fluor und Acetogen (R) -Ruß (Hersteller: Hoechst AG) mit Teilchengrößen um 35 Nanometer bereits bei Temperaturen um 100°C ein, während die Umsetzung von Kropfmühl-Naturgraphit mit Teilchengrößen um 200 µm Temperaturen um 450°C erfordert, wenn die Fluorkonzentration 30 Vol.-% beträgt. Als Kohlenstoff-Materialien können natürlicher oder synthetischer Graphit oder Ruß eingesetzt werden.

Es ist bevorzugt, wenn das eingesetzte Kohlenstoff-Pulver Teilchengrößen zwischen 30 und 500 µm, insbesondere 60 bis 250 µm besitzt. Bei Teilchengrößen des Graphits von 50 bis 100 µm liegt die Reaktionstemperatur vorzugsweise bei 325-375°C, bei Teilchengrößen von 100-200 µm bei 375 bis 425°C, bei Teilchengrößen von 200 bis 300 µm bei 425-450°C. Bei Teilchengrößen über 500 µm wird die Reaktionszeit unwirtschaftlich lang, bei Teilchengrößen unter 30 µm wird der Abbrand gemäß Gleichung (2) zu hoch, es sei denn man führt die Reaktion bei sehr geringen Fluorkonzentrationen und niedrigen Temperaturen durch. Dabei verschlechtert sich aber die Raum-Zeit-Ausbeute. Auch eine enge Kornverteilung des Pulvers ist von Vorteil. Kohlenstoff-Pulver, deren Teilchengröße wesentlich kleiner ist, lassen sich zwar leicht fluorieren, doch sind die Ausbeuten wegen der hohen Verluste durch $CF_4$-Bildung niedrig.

Das Behältermaterial soll gegen Fluor beständig sein (z.B. Monelmetall, Nickel, Aluminium). Das erfindungsgemäße Verfahren kann durchgeführt werden in einem von außen beheizbaren Reaktor, wie er in der Figur schematisch dargestellt ist. Dieser Reaktor besteht aus einem 800 mm langen Nickelrohr (1) mit einem Innendurchmesser von 50 mm, das an einer Seite verschlossen ist. Die Beheizung erfolgt von außen über den elektrischen Ofen (2) mit Temperatursteuerung (nicht gezeichnet). Das obere Ende des Rohres (1) ist durch den Deckel (6) verschlossen. Der Deckel ist mit einem zentrosymmetrisch angeordneten Gaseinlaßrohr (3), einem Gasauslaßrohr (4) und einem Temperaturfühler (5), der zur Temperaturmessung des Wirbelbettes dient, ausgerüstet. Das Gaseinlaßrohr (3) wird bis kurz vor den Boden des Rohres (1) geführt. Dieser Boden wirkt beim Betrieb wie eine Prallplatte, so daß das Reaktionsgas zunächst radial nach außen abgeleitet wird. Im allgemeinen genügt ein Abstand des Gaseinlaßrohres vom Reaktorboden von etwa 5 mm. Anschließend wird das Gas im Reaktor nach oben gelenkt, wobei ein Wirbelbett aus Kohlenstoffteilchen erzeugt wird. Wenn der Abstand des Gaseinlaßrohres vom Reaktorboden zu groß gewählt wird (etwa oberhalb 20 mm), so besteht die Gefahr, daß die Kohlenstoffteilchen am Reaktorboden nicht aufgewirbelt und in der Folge nicht umgesetzt werden.

Es ist überraschend, daß mit dem angegebenen Verfahren sich ein gut arbeitendes Fließbett herstellen läßt, während bei einer Gaseinleitung von unten durch eine Fritte ein Großteil des Kohlenstoffs auf der Fritte liegen bleibt.

Für die Umsetzung wird der Reaktor mit dem ausgewählten Kohlenstoffmaterial beschickt, mit einem Inertgas (z.B. Stickstoff) gefüllt und auf Reaktionstemperatur aufgeheizt. Die Reaktionstemperatur liegt im allgemeinen zwischen 100 und 450°C; sie sollte jedoch möglichst niedrig gewählt werden, um einen zu hohen Abbrand des Kohlenstoffmaterials zu Kohlenstofftetrafluorid und höheren Perfluoralkanen zu vermeiden. Wenn die Reaktionstemperatur im Reaktor erreicht wird, beginnt man damit, elementares Fluor dem Stickstoffgasstrom zuzudosieren.

Für die Ausbildung des Wirbelbettes ist es in einigen Fällen, insbesondere bei grobteiligen (250 bis 500 µm) Kohlenstoffmaterialien und/oder kleinen Gasgeschwindigkeiten (0,1 bis 10 cm/sec.), von Vorteil, den Reaktor mittels eines Vibrators in Schwingungen kleiner Amplitude zu versetzen. Auf diese Weise kommt es nicht zur Ausbildung von Gaskanälen durch die fast das gesamte Gas abfließt, und sogenannten Toträumen, die kaum vom Reaktionsgas durchströmt werden.

Durch das beschriebene Verfahren ist es möglich, Graphitfluorid gefahrlos und in hohen Ausbeuten herzustellen. Bei einmal festgelegten Reaktionsbedingungen bezüglich Wahl des Kohlenstoffmaterials, Fluorkonzentrationen und Reaktionstemperatur läßt sich der Fluorierungsgrad über die Reaktionszeit von 0 bis ca. 1,3 variieren.

Die Erfindung wird im folgenden anhand der Beispiele näher erläutert.

Beispiel 1

30 g Kropfmühl-Graphit mit einer Teilchengröße um 250 µm wurden in den beschriebenen Nickelreaktor eingefüllt und unter Einleitung von 20 l/h Stickstoff auf 450°C aufgeheizt. Nach Errehchen der Reaktionstemperatur wurden 10 l/h Fluorgas zum Stickstoff zudosiert. Nach einer Reaktionszeit von 24 Stunden wurde die Fluorzugabe unterbrochen und die Reaktionsmischung unter Spülung mit 10 l/h Stickstoff auf Raumtemperatur abgekühlt. Es wurde 60,2 g eines hellgrauen Pulvers der chemischen Zusammensetzung $CF_{0,97}$ erhalten.

Beispiel 2

30 g$^R$Sigri-Naturgraphit wurden in den Nickelreaktor eingefüllt und unter Einleitung von 20 l/h Stickstoff auf 430°C aufgeheizt. Nach Erreichen der Reaktionstemperatur wurden 10 l/h Fluorgas zum Stickstoff zudosiert. Nach 25 Stunden wurde die Fluorzugabe unterbrochen und die Reaktionsmischung unter Spülung mit 10 l/h Stickstoff auf Raumtemperatur abgekühlt. Nach Öffnen des Reaktors wurden 63,7

g eines weißgrauen Produktes der Zusammensetzung $CF_{1,05}$ erhalten.

Beispiel 3

30 g Sigri-Naturgraphit wurden analog Beispiel 2 umgesetzt mit dem Unterschied, daß die Reaktionstemperatur auf 450°C gesteigert und die Reaktionszeit auf 24 Stunden begrenzt wurden. Man erihelt 65,8 g eines hellgrauen Produktes der chemischen Zusammensetzung $CF_{1,15}$.

Beispiel 4

30 g Lonza-Graphit KS 44 mit einer Teilchengröße kleiner 63 µm-wurden in den Nickelreaktor eingefüllt und unter Stickstoffspülung (20 l/h) auf 400°C aufgeheizt. Nach Erreichen der Reaktionstemperatur wurden 24 h lang 10 l/h Fluor zum Stickstoff zudosiert. Anschließend wurde unter Spülung mit 10 l/h Stickstoff auf Raumtemperatur abgekühlt und der Reaktor geöffnet. Es wurden 63,5 g eines grauen Produktes der Zusammensetzung $CF_{0,95}$ erhalten.

Vergleichsbeispiel 1

30 g Lonza-Graphit KS 44 mit einer Teilchengröße kleiner 63,5 µm wurden analog Beispiel 4 umgesetzt, jedoch betrug die Reaktionstemperatur 580°C und die Fluorkonzentration betrug 50 Vol.-%. Lediglich 1,7 g eines weißen Pulvers der chemischen Zusammensetzung $CF_{1,26}$ konnten isoliert werden.

Beispiel 5

20 g[R]Cabot-Ruß Vulcan XC 72 R wurden analog Beispiel 1 bei einer Temperatur von 200°C umgesetzt. Es wurden 17,2 g eines dunkelgrauen Pulvers erhalten, welches mit weißen Klumpen durchsetzt war. Die Elementaranalyse ergab im Schnitt eine Zusammensetzung von $CF_{0,65}$.

Beispiel 6

15 g Acetogen-Ruß der Hoechst AG mit einer mittleren Teilchengröße von 35 nm wurden bei Temperaturen von 170°C analog Beispiel 1 umgesetzt. Als Reaktionsprodukt wurden 19,7 g eines grauweißen Pulvers der Zusammensetzung $CF_{1,05}$ erhalten.

Beispiel 7

30 g Sigri-Graphit NFL wurden analog Beispiel 1 bei 450°C umgesetzt. Nach 24 Stunden wurden 60 g Produkt der Zusammensetzung $CF_{1,01}$ erhalten.

**Ansprüche**

1. Verfahren zur Fluorierung von Kohlenstoffpulver, das in der Gasphase suspendiert ist, bei erhöhter Temperatur in einem prismenförmigen Behälter, der unten einen Boden und oben eine Öffnung aufweist, vertikal angeordnet ist und eine zentrosymmetrische Gaseinleitung besitzt, mit Hilfe eines Gases, das elementares Fluor enthält, dadurch gekennzeichnet, daß eine Reaktionstemperatur von 100 bis 450°C eingehalten wird, das Gas mit Hilfe eines Rohres eingeleitet wird, das nahe der Mitte des Bodens des Behälters endet und das eingeleitete Gas von oben kommend auf die Mitte des Bodens des Behälters gerichtet wird.

2. Verfahren nach Anspruch 1, dadurch gekennzeichnet, daß die Reaktionszeit 1 bis 24, insbesondere 1 bis 12 Stunden beträgt.

3. Verfahren nach Anspruch 1, dadurch gekennzeichnet, daß das eingeleitete Gas ein Gemisch aus elementarem Fluor und einem Inertgas darstellt.

4. Verfahren nach Anspruch 3, dadurch gekennzeichnet, daß der Fluorgehalt des eingeleiteten Gases 5 bis 80 Vol.-%, insbesondere 10 bis 50 Vol.-%, beträgt.

5. Verfahren nach Anspruch 1, dadurch gekennzeichnet, daß das Kohlenstoff-Pulver eine Teilchengröße zwischen 30 und 500 µm, insbesondere 60 bis 250 µm, besitzt.

6. Verfahren nach Anspruch 1, dadurch gekennzeichnet, daß der Boden des Reaktionsbehälters horizontal angeordnet ist.

7. Verfahren nach Anspruch 1, dadurch-gekennzeichnet, daß ein zylinderförmiger Behälter verwendet wird.

**Claims**

1. A process for the fluorination of carbon powder suspended in the gas phase at elevated temperatures in a prismshaped vessel which has a base at the bottom and an opening at the top, is arranged vertically and has a centro-symmetric gas inlet, with the aid of a gas containing elemental fluorine, which comprises a procedure in which the reaction temperature is kept at 100°C to 450°C, wherein the gas is passed in with the aid of an inlet tube which ends close to the middle of the base of the vessel and the incoming gas is directed from the top to the center of the base of the vessel.

2. The process as claimed in claim 1, wherein the reaction time is 1 to 24, in particular 1 to 12 hours.

3.The process as claimed in claim 1, wherein the gas passed in is a mixture of elemental fluorine and an inert gas.

4. The process as claimed in claim 3, wherein the fluorine content of the gas passed in is 5 to 80% by volume, in particular 10 to 50% by volume.

5. The process as claimed in claim 1, wherein the carbon powder has a particle size between 30 and 500 µm, in particular 60 and 250 µm.

6. The process as claimed in claim 1, wherein the base of the reaction vessel is arranged horizontally.

7. The process as claimed in claim 1, wherein a cylindrical vessel is used.

## Revendications

1. Procédé pour fluorer de la poudre de carbone, qui est en suspension dans la phase gazeuse, à température élevée dans un récipient prismatique (qui présente un fond vers le bas et une ouverture vers le sommet, qui est disposé verticalement et comporte une introduction de gaz à symétrie centrale), à l'aide d'un gaz contenant du fluor élémentaire, procédé caractérisé en ce qu'on maintient une température de réaction de 100 à 450°C, en ce qu'on introduit le gaz à l'aile d'un tube qui se termine près du milieu du fond du récipient et en ce qu'on dirige le gaz introduit, provenant du haut, vers le milieu du fond du récipient.

2. Procédé selon la revendication 1, caractérisé en ce que le temps de réaction est de une à vingt-quatre heures, notamment une à douze heures.

3. Procédé selon la revendication 1, caractérisé en ce que le gaz introduit est un mélange de fluor élémentaire et d'un gaz inerte.

4. Procédé selon la revendication 3, caractérisé en ce que la teneur en fluor du gaz introduit est de 5 à 80% en volume, notamment de 10 à 50% en volume.

5. Procédé selon la revendication 1, caractérisé en ce que la poudre de carbone possède une grosseur des particules comprise entre 30 et 500 µm, notamment entre 60 et 250 µm.

6. Procédé selon la revendication 1, caractérisé en ce que le fond du récipient de réaction est horizontal.

7. Procédé selon la revendication 1, caractérisé en ce qu'on utilise un récipient cylindrique.

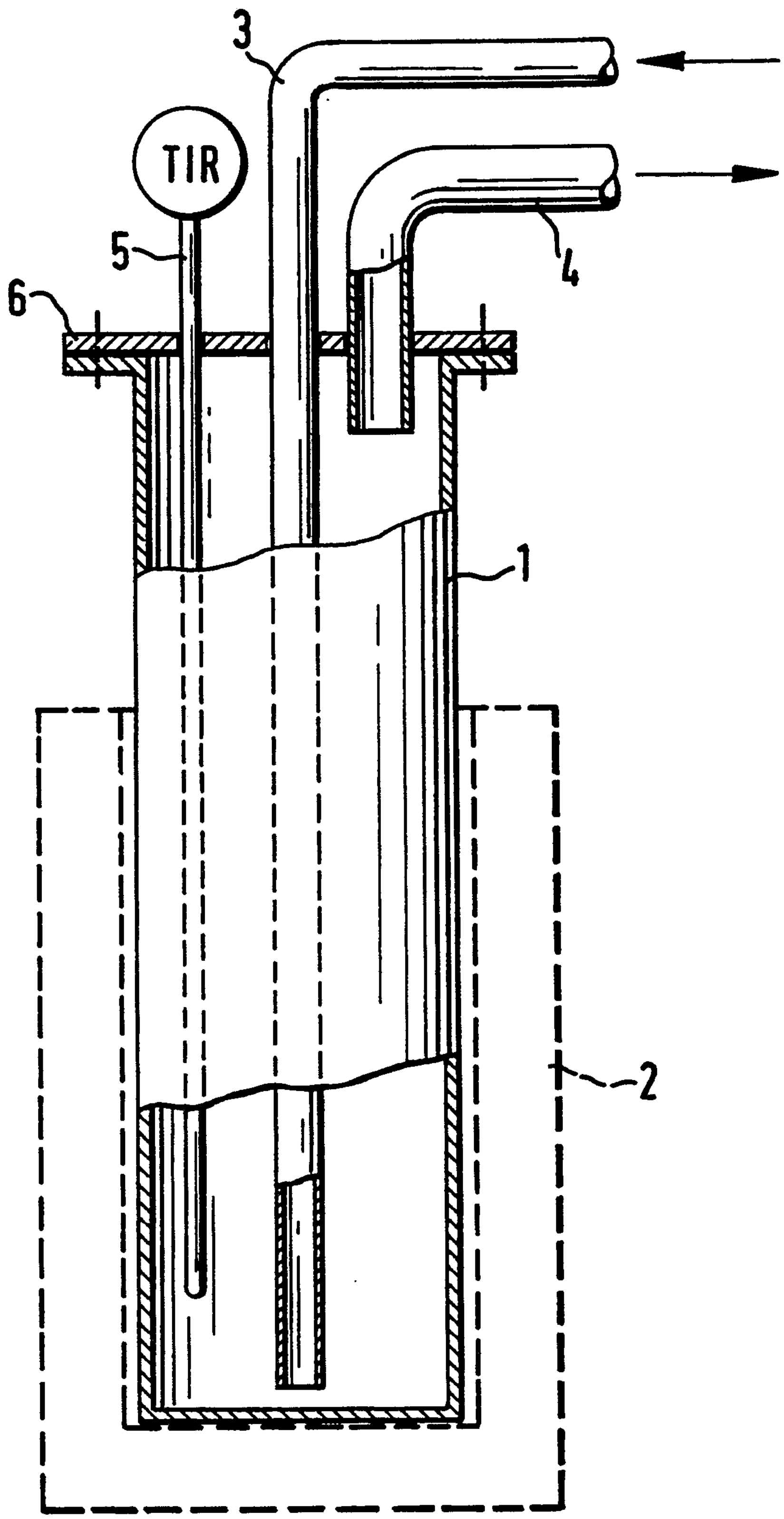
3
TIR
5
6
4
1
2